# EUROPEAN PATENT SPECIFICATION

(11) **EP 4 318 400 B1**
(45) Date of publication and mention of the grant of the patent: **18.02.2026**
(21) Application number: 23189007.0
(22) Date of filing: 01.08.2023
(51) Int. Cl.: G06T 11/00

(54) **IMAGE PROCESSING APPARATUS, IMAGE PROCESSING METHOD AND PROGRAM**
BILDVERARBEITUNGSVORRICHTUNG, BILDVERARBEITUNGSVERFAHREN UND PROGRAMM
APPAREIL DE TRAITEMENT D'IMAGE, PROCÉDÉ DE TRAITEMENT D'IMAGE ET PROGRAMME

(30) Priority: 01.08.2022 US 202217878413; 27.06.2023 JP 2023105420
(43) Date of publication of application: 07.02.2024
(73) Proprietor: Canon Medical Systems Corporation, Tochigi 324-0036 (JP)
(72) Inventor: CHAN, Chung, Otawara-shi, 324-0036 (JP); YANG, Li, Otawara-shi, 324-0036 (JP); LI, Xiaoli, Otawara-shi, 324-0036 (JP); QI, Wenyuan, Otawara-shi, 324-0036 (JP); ASMA, Evren, Otawara-shi, 324-0036 (JP); KOLTHAMMER, Jeffrey, Otawara-shi, 324-0036 (JP)
(74) Representative: Marks & Clerk LLP

(56) References cited:
- WO-A1-2018/083464
- ALQAHTANI ALI ET AL: "Deep Time-Series Clustering: A Review", ELECTRONICS, vol. 10, no. 23, 2 December 2021 (2021-12-02), Basel, Switzerland, pages 3001, XP093113762, ISSN: 2079-9292, DOI: 10.3390/electronics10233001
- MATSUBARA KEISUKE ET AL: "A review on AI in PET imaging", ANNALS OF NUCLEAR MEDICINE, JAPANESE SOCIETY OF NUCLEAR MEDICINE, TOKYO, JP, vol. 36, no. 2, 14 January 2022 (2022-01-14), pages 133 - 143, XP037693268, ISSN: 0914-7187, [retrieved on 20220114], DOI: 10.1007/S12149-021-01710-8

## Description

### FIELD

Embodiments described herein relate generally to an image processing apparatus, an image processing method and a program.

### BACKGROUND

In clinical fields, the large computational time required to reconstruct a large amount of high-quality sample images becomes a problem when it comes to acquiring dynamical images in clinical fields.

However, in known dynamic frame reconstruction methods, it is necessary to perform scatter estimates and random estimates during reconstruction of each dynamic frame, which is very demanding in terms of computational cost.

WO 2018083464A relates to a method for determining a motion signal from positron emission tomography (PET) image data. PET image data obtained from a PET scan of a patient is provided, wherein the PET image data comprises spatial coordinates, time-of-flight (TOF) information and acquisition timing information for each line of response (LOR) of the PET scan. The method comprises allocating the PET image data to different TOF bins based on the TOF information; assigning weighting factors to the PET image data based on at least the TOF bin to which the PET image data is allocated so as to give greater weighting to PET image data corresponding to a region of interest in the field of view of the PET scan; and applying a motion detection method to the PET image data so as to generate a motion signal indicative of physiological movement of the patient. The PET image data are used as an input for the motion detection method in accordance with the weighting factors assigned to the PET image data such that the motion signal is indicative of physiological movement in the region of interest.

Alqahtani Ali Et Al: "Deep Time-Series Clustering: A Review" relates to a review of time-series data analysis with an emphasis on deep time-series clustering (DTSC), and a case study in the context of movement behaviour clustering utilizing the deep clustering method. It is described that time-series data has shown considerable diversity in relevant features and properties, dimensionality, and temporal scales, and that, to overcome these challenges, a deep learning method can be designed to disentangle the data manifolds and allow a clustering method to deal with learned features instead of raw data. Two types of deep clustering methods are presented: separated clustering, where latent features for given data are extracted and clustering is performed on learned representations, and embossed clustering, where a clustering algorithm is embedded into deep neural networks and feature representations and clustering assignments are simultaneously learned, applying a joint loss function.

### SUMMARY OF INVENTION

According to a first aspect, there is provided an image processing apparatus according to claim 1.

The processing circuitry may be configured to estimate the first and second frame group-specific reconstruction parameters based on (1) frames in first frame group and (2) frames in the second frame group comprises processing circuitry configured to estimate the first and second frame group-specific reconstruction parameters based on (1) a last-in-time frame in first frame group and (2) a last-in-time frame in the second frame group.

The processing circuitry may be configured to estimate the first and second frame group-specific reconstruction parameters based on (1) frames in first frame group and (2) frames in the second frame group comprises processing circuitry configured to estimate respective frame group-specific reconstruction parameters from (1) a single frames for a frame group having only one frame, and (2) less than all frames for frame groups having more than one frame.

The processing circuitry may be configured to estimate the first and second frame group-specific reconstruction parameters based on (1) frames in first frame group and (2) frames in the second frame group comprises processing circuitry configured to estimate respective frame group-specific reconstruction parameters from (1) a single frames for a frame group having only one frame, and (2) an average of plural frames for frame groups having more than one frame.

The plurality of frames may be a plurality of frames of crystal counts.

The first and second frame group-specific reconstruction parameters may be first and second frame group-specific scatter parameters, respectively.

The first and second frame group-specific reconstruction parameters are first and second frame group-specific random event parameters, respectively.

The plurality of frames may be a plurality of pre-reconstruction data frames.

The plurality of pre-reconstruction data frames may be a plurality of crystal count maps.

The plurality of pre-reconstruction data frames may be a plurality of frames of sinogram data.

The plurality of frames may be a plurality of preview reconstruction frames without scatter correction.

The processing circuitry may be configured to assign at least one frame of the plurality of frames into a first frame group based on the similarity of each frame, and assign at least one frame of the plurality of frames into a second frame group based on the similarity of each frame within the second frame group comprises processing circuitry configured to perform clustering to assign the at least one frame of the plurality of frames into the first frame group based on the similarity of each frame, and assign the at least one frame of the plurality of frames into the second frame group based on the similarity of each frame within the second frame group.

The processing circuitry may be configured to assign at least one frame of the plurality of frames into a first frame group based on the similarity of each frame, and assign at least one frame of the plurality of frames into a second frame group based on the similarity of each frame within the second frame group comprises processing circuitry configured to produce a set of latent features from the plurality of frames and assign the at least one frame of the plurality of frames into the first frame group based on a similarity of latent features of the set of latent features of each frame, and assign the at least one frame of the plurality of frames into the second frame group based on a similarity of latent features of the set of latent features of each frame within the second frame group.

The processing circuitry may be configured to assign at least one frame of the plurality of frames into a first frame group based on the similarity of each frame, and assign at least one frame of the plurality of frames into a second frame group based on the similarity of each frame within the second frame group comprises processing circuitry configured to: produce a set of latent features from the plurality of frames, cluster the set of latent features from the plurality of frames, assign the at least one frame of the plurality of frames into the first frame group based on the clustered latent features of the set of latent features of each frame, and assign the at least one frame of the plurality of frames into the second frame group based on the clustered latent features of the set of latent features of each frame within the second frame group.

According to an aspect, there is provided an image processing method according to claim 14.

According to an aspect, there is provided a program according to claim 15.

### BRIEF DESCRIPTION OF THE DRAWINGS

FIG. 1 shows a flow block diagram of the disclosed method of rebinning listmode data into a plurality of timeframes, clustering input data corresponding to the plurality of timeframes into frame groups, determining at least one group-specific reconstruction parameter from at least one of the frames (e.g., the last frame) in each of the frame groups, and performing reconstruction of all the frames in a frame group using the at least one group-specific reconstruction parameter for the frame group;
FIGS. 2A-2D show exemplary steps from FIG. 1 more detailed an embodiment of the method which uses a crystal count map determined from listmode data which is used as input to the CNN;
FIG. 3 shows a flow diagram of crystal count maps (acting as frames) being applied to a neural network to performing clustering of the crystal count maps into frame groups;
FIG. 4A shows a neural network (an encoder/decoder network) being trained to produce latent features from a set of crystal count maps and regenerate an approximation of the original crystal count map from the latent features;
FIG. 4B shows a neural network trained using the method of FIG. 4A being used to generate latent features that are used to group the frames rather than grouping the frames using the crystal count maps directly;
FIG. 4C shows clustering being performed in a self-supervised fashion (using a series of encoder/decoder networks similar to the single encoded/decoder network of FIG. 4B) but in which each crystal count map is used to generate its own encoder/decoder network of n epochs and the resulting latent features generated from the *n*^{th} epoch are used for clustering.
FIG. 5A shows a frame reconstruction of an exemplary frame using a reconstruction parameter outside of the frame group of the frame to be reconstructed;
FIG. 5B shows a frame reconstruction of an exemplary frame using a reconstruction parameter within the frame group of the frame to be reconstructed;
FIG. 6 is an illustration of a perspective view of a PET scanner, according to an exemplary embodiment of the present disclosure; and
FIG. 7 is a schematic of a PET scanner and associated hardware, according to an exemplary embodiment of the present disclosure.

### DETAILED DESCRIPTION

In nuclear medical imaging, PET scans are subject to scattering that reduces image quality. In addition, the time to process and reconstruct the image is computationally expensive when including scatter correction. In order to correct for the scatter, a real-time reconstruction process is described herein that clusters similar image frames into frame groups and uses a single frame group-specific reconstruction parameter (e.g., scatter estimation) on any frame within the frame group.

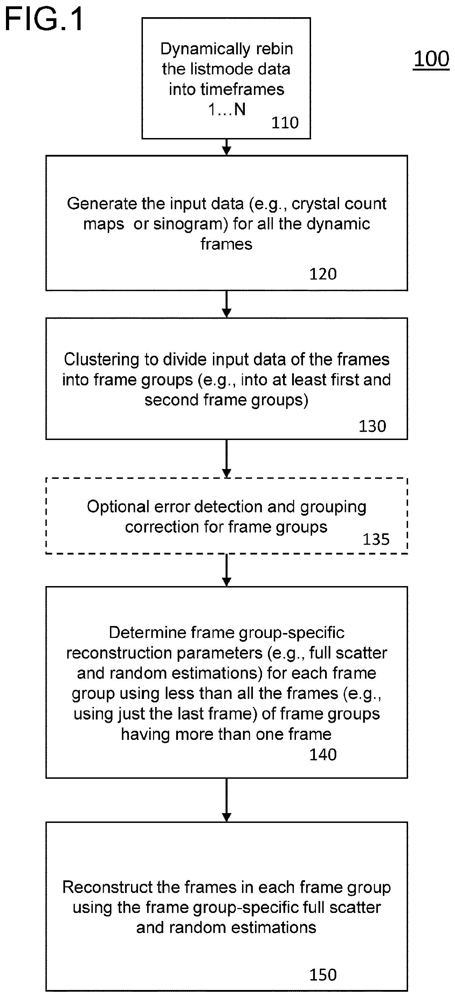

FIG. 1 shows a flow diagram of an exemplary method 100 in which frames are dynamically rebinned into frame groups, and a representative frame in each of the frame groups is used to determine a frame group-specific reconstruction parameter for its corresponding frame group.

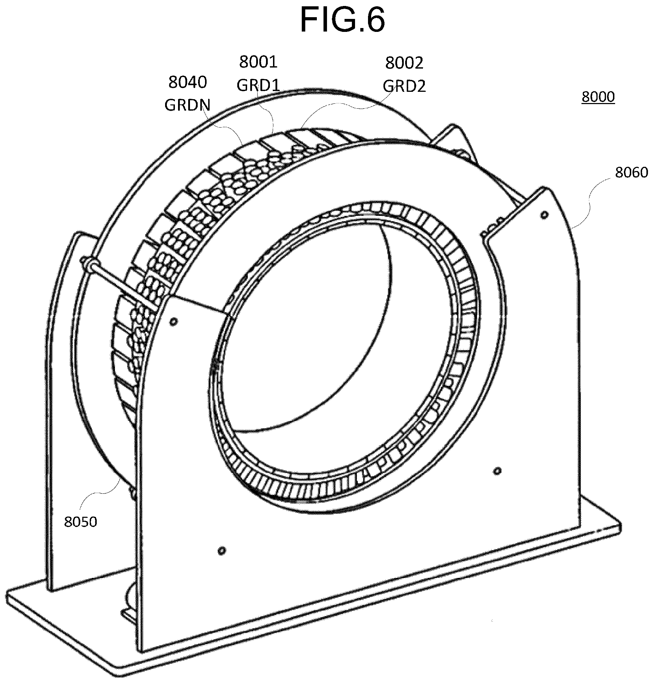

The method 100 starts with step 110 where listmode data is dynamically rebinned (or assigned or divided) into a plurality of sequential timeframes (e.g., with each timeframe being a fixed interval such as 10s/timeframe all from the same examination) over the course of a single scan procedure (i.e., part of the same study/examination). In other words, the processor 9070 to be described in FIG. 6 as processing circuitry acquires list-mode data corresponding to a plurality of detection times, and generates a plurality of frames based on the acquired list-mode data.

In step 120, input data (e.g., a crystal count map or a sinogram) acting as frames is generated from the list mode data for the generated timeframes. In other words, the plurality of frames the processor 9070 as processing circuitry generates, are, for example, a plurality of frames of crystal counts. Further, as example, the plurality of frames are, for example, a plurality of crystal count map, a plurality of frames of sinogram data frame, or a plurality of pre-reconstruction data frames such as a plurality of preview reconstruction frames without scatter correction.

In step 130, the frames are divided (e.g., using convolutional neural network (CNN) clustering) into frame groups. The frames are grouped such that all the frames in the frame group share a frame group-specific reconstruction parameter (e.g., scatter and random estimations) that may be computed once and shared among the frames of the frame group. Further, within each group, the dynamic frames should share a similar radiotracer distribution in the final reconstructed images. In other words, the processor 9070 performs clustering using a neural network. For example, based on the similarity of each frame, the processor 9070 performs clustering to assign at least one frame of the plurality of frames into the first frame group based on the similarity of each frame, and to assign at least one frame of the plurality of frames into the second frame group based on the similarity of each frame.

The processing circuitry produces a set of latent features from the generated plurality of frames and perform the processing as described above. The processor 9070 as the processing circuitry produces a set of latent features from the plurality of frames, clusters the set of latent features from the plurality of frames, assigns the at least one frame of the plurality of frames into the first frame group based on the clustered latent features of the set of latent features of each frame, and assigns the at least one frame of the plurality of frames into the second frame group based on the clustered latent features of the set of latent features of each frame.

In optional step 135, error detection and correction can be used to ensure that the groupings are consistent with a physical model that represents how uptake should occur in a patient being scanned.

In FIG. 1, in step 140, frame group-specific reconstruction parameters (e.g., full scatter and random estimations) are determined for each frame group. That is, first and second frame group-specific reconstruction parameters based on (1) frames in first frame group and (2) frames in the second frame group, respectively, are estimated, wherein the first and second frame group-specific reconstruction parameters are different. For frame groups having more than one frame, less than all the frames (e.g., using just the last frame) are used to determine the frame group-specific reconstruction parameters.

In other words, the processor 9070 as processing circuitry estimates first group-specific reconstruction parameter that is a first reconstruction parameter based on frames in the first frame group and estimates second group-specific reconstruction parameter that is a second reconstruction parameter based on frames in the second frame group, the first reconstruction parameter and the second reconstruction parameter that is second frame group-specific reconstruction parameters being different.

As an example, processor 970 as processing circuitry estimates the first reconstruction parameter based on a last-in-time frame in first frame group, and estimates the second reconstruction parameter based on a last-in-time frame in the second frame group. However, embodiments are not limited to this case. The processing circuitry may, for example, use the first frame or the middle frame to estimate the reconstruction parameter

Further, if the group has a single frame, the processing circuitry estimates the reconstruction parameter based on the single frame. For example, when the first group is a frame having only one frame and the second group is a frame group having a plurality of frames, the processing circuitry estimates the first reconstruction parameter from a single frame for the first frame group that is a frame group having only one frame and estimates the second reconstruction parameter from less than all frames for the second frame group having more than one frame.

In an alternate embodiment, for frame groups having more than one frame, a combination of frames (e.g., an average of frames) can be calculated for less than all of the frames in the frame group. In this case, the processing circuitry estimates the second reconstruction parameter from an average of plural frames for the second frame group having more than one frame.

As shown in step 150, the frames in each frame group are reconstructed using the same frame group-specific reconstruction parameter. In other words, the processing circuitry reconstructs the first frame data set from frames of the first frame group based on the first reconstruction parameter and reconstructs the second frame data set from frames of the second frame group based on the second reconstruction parameter. Here, the first and second frame group-specific reconstruction parameters are first and second frame group-specific scatter parameters. Alternatively, the first and the second reconstructing parameters are first and second frame group-specific random event parameters.

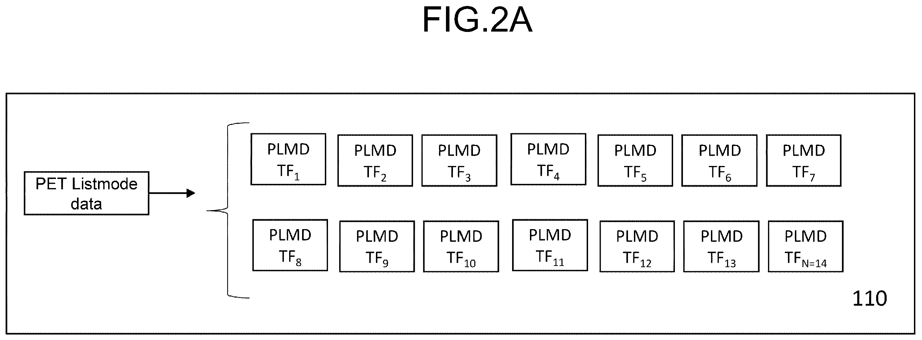

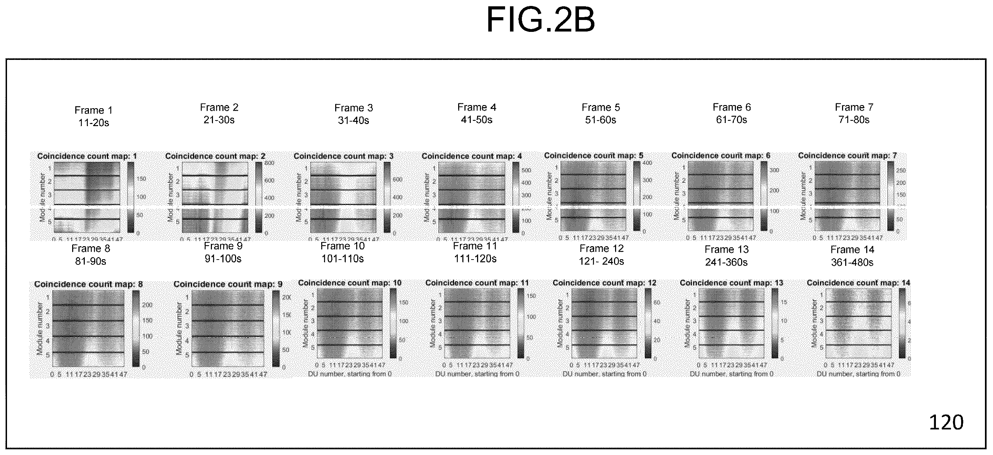

FIG. 2A shows a graphic illustration of step 110 in which listmode data is dynamically rebinned (or assigned or divided) into a plurality of timeframes TFₓ (e.g., with each timeframe being (1) a fixed interval such as 10s/timeframe or (2) a varying timeframe) over the course of a scan procedure (e.g., lasting 480 seconds). FIG. 2B shows an embodiment where the input data generated in step 120 is a series of crystal count maps for fourteen corresponding time frames TF₁ to TF_{N=14}. That is, the crystal count maps show a sum of a number of detection events at each of the crystal positions of a corresponding crystal. As would be appreciated by those of skill in the art, multiple crystals can be concatenated to form a larger virtual crystals whose detection events are counted. As shown in FIG. 2B, not all timeframes need to be of a same length. TF₁ is illustrated as being of length 10 seconds whereas TF_{N=14} is illustrated as being of length 120s.

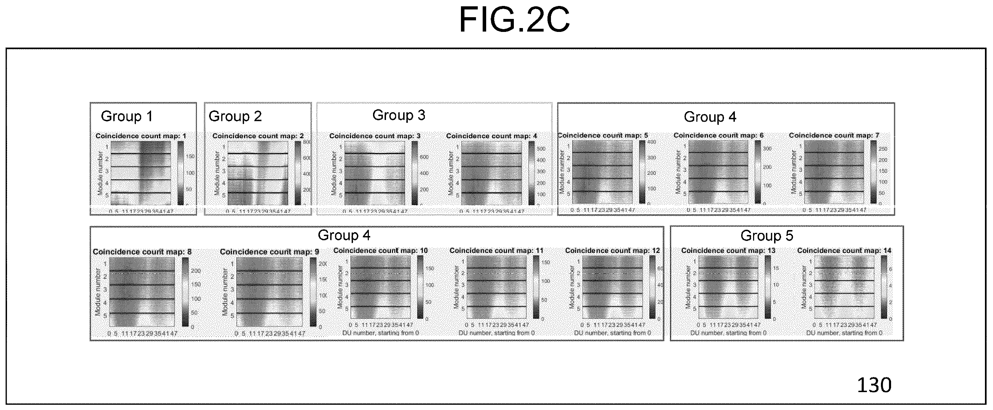

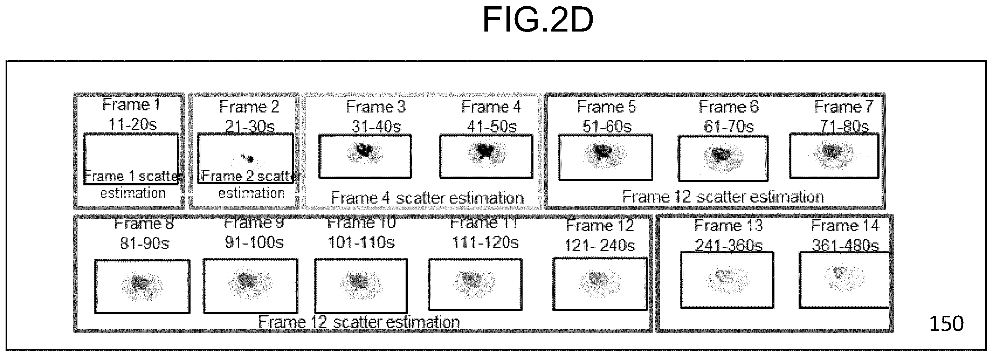

FIG. 2C shows a result of step 130 grouping the frames into frames having similar crystal count maps, thereby forming 5 different frame groups. The frames assigned to the 5 illustrated frame groups are: group 1: {Frame 1}, group 2: {Frame 2}, group 3: {Frames 3-4}, group 4: {Frames 5-12}, and group 5: {Frames 13-14}. As noted above, the lengths of the corresponding timeframes need not be the same. FIG. 2D shows a result of step 150 whereby the frames in each frame group are reconstructed using the same frame group-specific reconstruction parameter for the corresponding frame group.

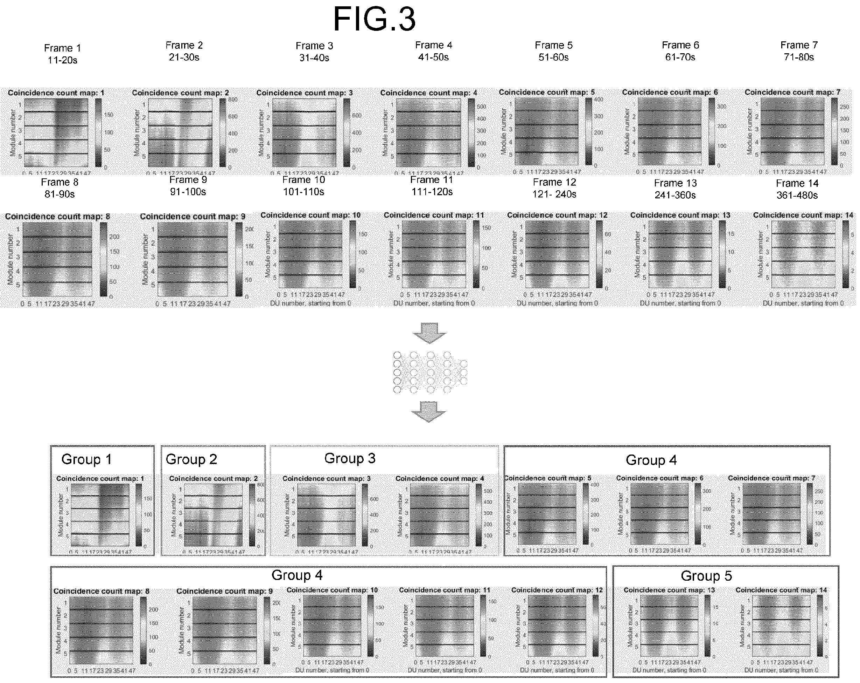

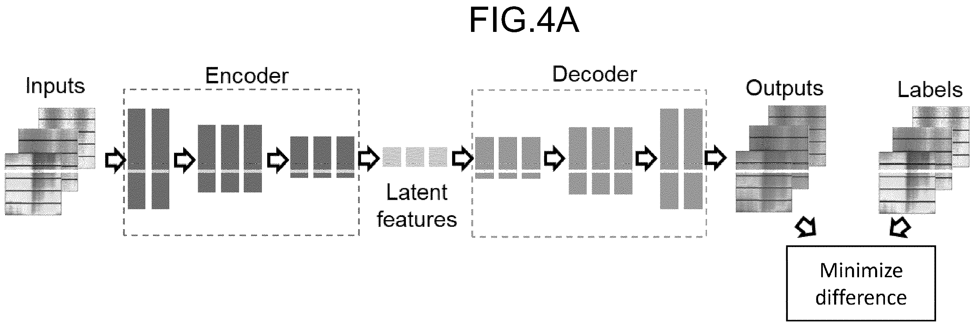

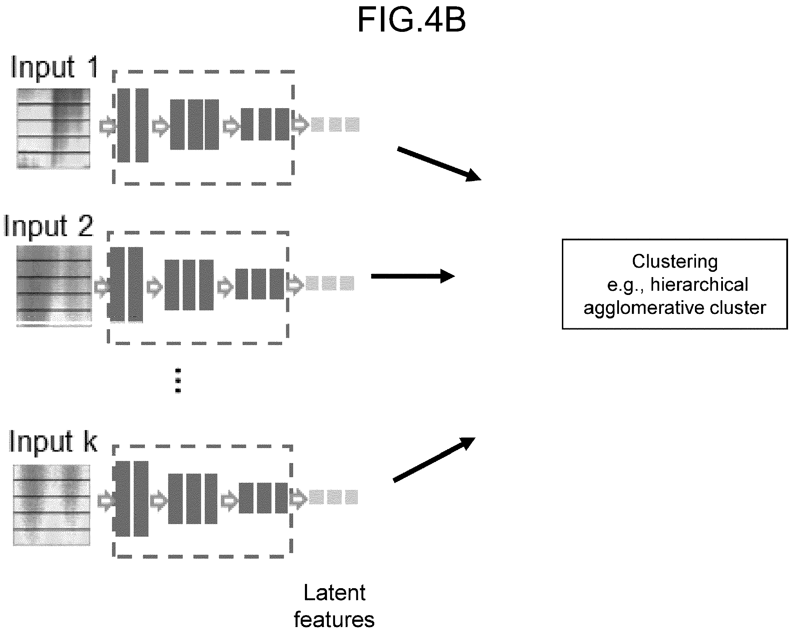

FIG. 3 shows a flow diagram of crystal count maps (acting as frames) being applied to a neural network to performing clustering of the crystal count maps into frame groups such as is performed in step 130. In one embodiment, the clustering is achieved by using a deep-learning CNN for feature extraction and dimensionality reduction, followed by a clustering algorithm applied to the learned representations. An auto-encoder neural network is used for feature extraction with a reconstruction loss, i.e., minimize the L2 norm, during a training phase, with known labels (same as inputs), as discussed below with respect to Fig. 4A. Further, in a testing phase, the decoder of the auto-encoder is removed, and the latent features generated by the encoder portion of the auto-encoder are sequentially fed into a clustering algorithm, such as a hierarchical agglomerative clustering algorithm, e.g. using Matlab or Machine Learning Toolbox, which does not require a predetermined number of clusters for clustering. See Fig. 4B.

As shown in FIG. 4A, an auto-encoder neural network (having an encoder and a decoder) can be trained to produce latent features from a set of crystal count maps, and regenerate an approximation of the original crystal count map from the latent features. In one embodiment, the encoder/decoder network is a neural network that extracts input image features then rebuilds the input image from the extracted features. The encoder network includes convolution layers as well as sets of pooling layers. The convolution layers transform the image using the convolution process. The convolution layer can be described as a series of digital filters. The layer of pooling transforms the neighboring pixels into a single pixel. The pooling layer then decreases the image dimension. In general, the auto-encoder is trained to minimize the difference between the output of the auto-encoder and the original images (which are simultaneously used as input images and training labels). The network is run through a sufficient number of training epochs to reduce the difference between the outputs and the labels to below a threshold.

FIG. 4B shows a neural network trained using the method of FIG. 4A being used to generate latent features (without needing the decoder portion of the network anymore), and the latent features are then used to group the frames, rather than grouping the frames using the crystal count maps directly. As shown in FIG. 4B, the latent features can be clustered using any neural network or using a non-neural network-based clustering method. As noted above, in one embodiment, the latent features generated by the encoder is sequentially fed into hierarchical agglomerative clustering algorithm, which does not require a predefined number of clusters, for clustering.

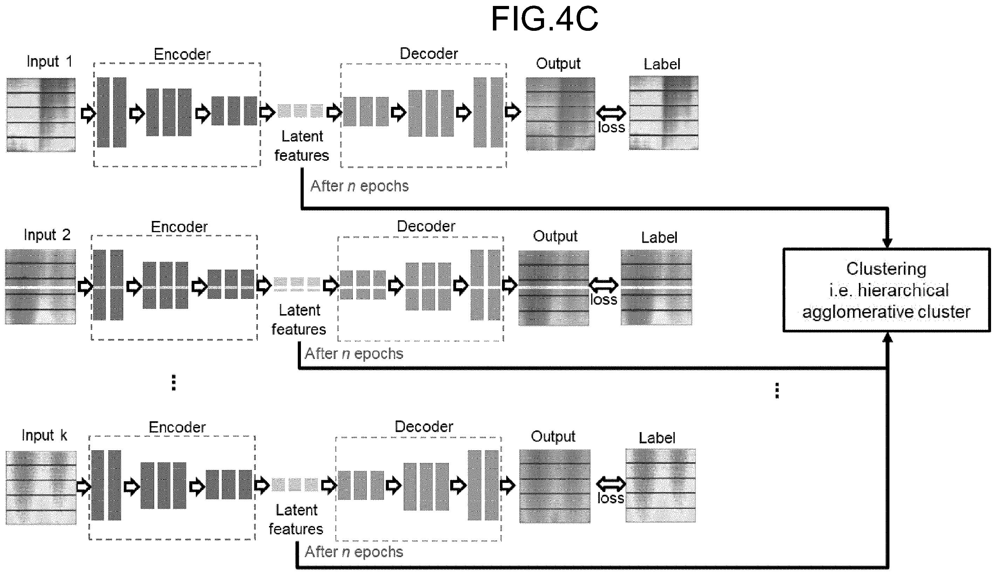

FIG. 4C shows an additional alternate embodiment. In FIG. 4C, clustering is performed in a self-supervised fashion (using a series of auto-encoder networks similar to the single auto-encoder network of FIG. 4B), but in which each crystal count map is used to generate its own encoder/decoder network over n epochs and the resulting latent features for each network generated from the *n*^{th} epoch are used for clustering. The clustering may be a clustering technique such as a hierarchical agglomerative clustering technique.

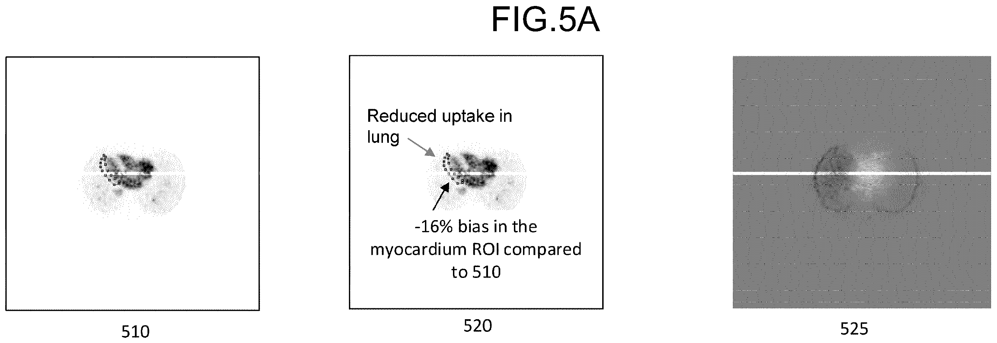

FIG. 5A shows a portion of a comparative frame reconstruction of an exemplary frame. Image 510 shows a reconstruction using self- scatter estimation as the ground truth for exemplary Frame 3. Image 520 shows frame 3 reconstruction using a scatter estimation corresponding to frame 14 (which is outside of the corresponding frame group). A bias of 16% as compared to the self-scatter estimation image 510 is obtained as shown in image 520. Image 525 is a difference image between images 510 and 520 and shows large bias in lung and myocardium due to inaccurate scatter estimation.

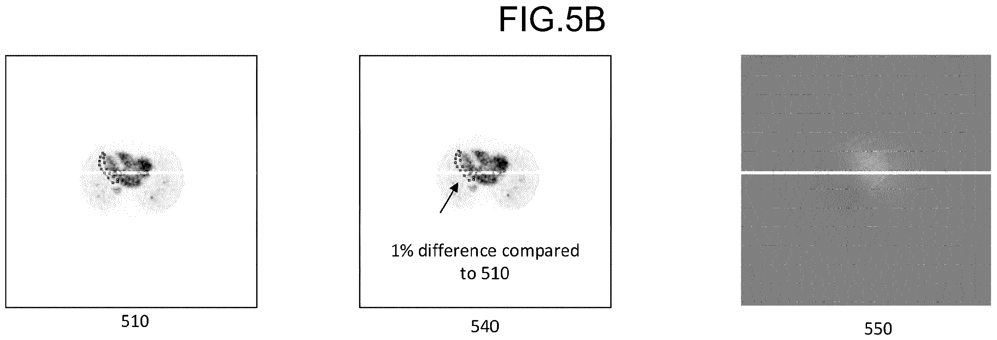

FIG. 5B shows a more accurate frame reconstruction based on the method described herein. Image 540 shows a Frame 3 reconstruction image using group scatter estimation based on the clustering result of FIG. 2D. A bias of approximately 1% is achieved as compared to the self-scatter image 510. Image 550 is a difference image between images 510 and 540 and shows reduced bias in lung and myocardium as compared to image 520.

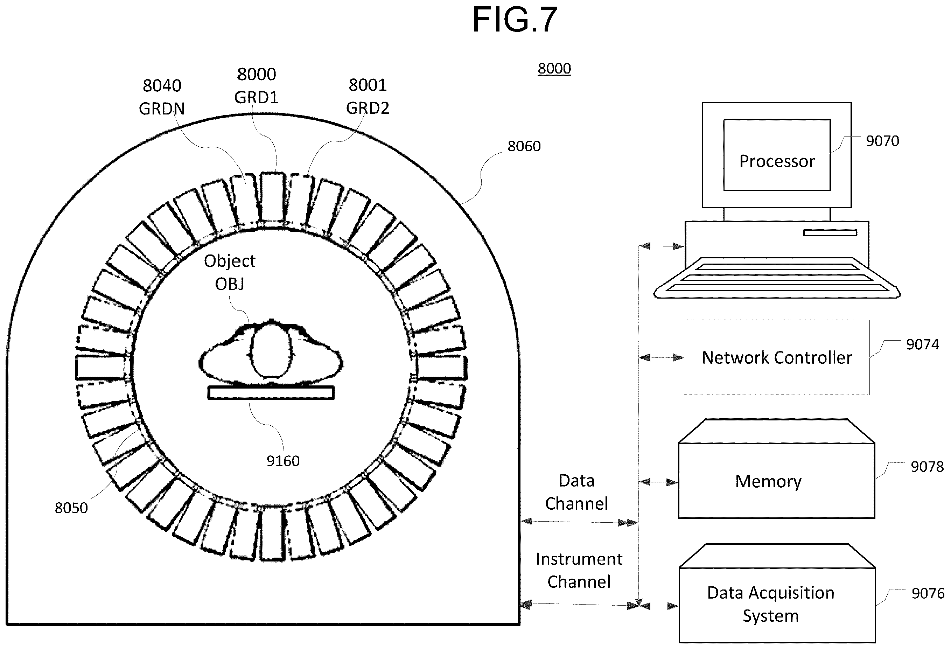

In one embodiment, it can be appreciated that the methods of the present disclosure may be implemented within a PET scanner, as shown in FIG. 6 and FIG. 7. Therefore, FIG. 6 and FIG. 7 show a PET scanner 8000 including a number of gamma-ray detectors (GRDs) 8001, 8002...8040 (e.g., GRD1, GRD2, through GRDN) that are each configured as rectangular detector modules. The PET scanner 8000 may be an adaptive axial Field of View (aaFOV) PET scanner, as introduced above. According to one implementation, each PET detector ring, which forms a cylindrical bore 8050 about a gantry 8060 includes, for example, 40 GRDs. In another implementation, there are 48 or more GRDs, the higher number of GRDs being used to create a larger bore size for the PET scanner 8000. As in the present disclosure, each PET detector ring may be independently translatable about an axial length of the aaFOV PET scanner. The translation of each PET detector ring may be accomplished by manual manipulation and/or motorized manipulation. The GRDs include scintillator crystal arrays for converting the gamma rays into scintillation photons (e.g., at optical, infrared, and ultraviolet wavelengths), which are detected by photodetectors. Each GRD can include a two-dimensional array of individual detector crystals, which absorb gamma radiation and emit scintillation photons. The scintillation photons can be detected by a two-dimensional array of photomultiplier tubes (PMTs) that are also arranged in the GRD. A light guide can be disposed between the array of detector crystals and the PMTs. Further, each GRD can include a number of PMTs of various sizes, each of which is arranged to receive scintillation photons from a plurality of detector crystals. Each PMT can produce an analog signal that indicates when scintillation events occur, and an energy of the gamma ray producing the detection event. Moreover, the photons emitted from one detector crystal can be detected by more than one PMT, and, based on the analog signal produced at each PMT, the detector crystal corresponding to the detection event can be determined using Anger logic and crystal decoding, for example. However, Anger arithmetic is not necessarily required when there is a one-to-one correspondence between the crystals and the photodetectors.

FIG. 7 shows a schematic view of a PET scanner system having GRDs 8001, 8002...8040 arranged to detect gamma-rays emitted from an object OBJ. The GRDs can measure the timing, position, and energy corresponding to each gamma-ray detection. In one implementation, the gamma-ray detectors are arranged in a PET detector ring, as shown in FIG. 6 and FIG. 7, and as described herein. It can be appreciated that the single PET detector ring of FIG. 7 can be extrapolated to include any number of PET detector rings along an axial length of the PET scanner. The detector crystals can be scintillator crystals, which have individual scintillator elements arranged in a two-dimensional array and the scintillator elements can be any known scintillating material. The PMTs can be arranged such that light from each scintillator element is detected by multiple PMTs to enable Anger arithmetic and crystal decoding of scintillation event.

FIG. 7 shows an example of the arrangement of the PET scanner 8000, in which the object OBJ to be imaged rests on a table 9160 and the GRD modules GRD1 8001 through GRDN 8040 are arranged circumferentially around the object OBJ and the table 9160. The GRDs may comprise a PET detector ring and may fixedly-connected to a cylindrical bore 8050 that is fixedly-connected to a gantry 8060. The gantry 8060 houses many parts of the PET scanner. The gantry 8060 of the PET scanner also includes an open aperture, defined by the cylindrical bore 8050, through which the object OBJ and the table 9160 can pass, and gamma-rays emitted in opposite directions from the object OBJ due to an annihilation event can be detected by the GRDs and timing and energy information can be used to determine coincidences for gamma-ray pairs.

In FIG. 7, circuitry and hardware is also shown for acquiring, storing, processing, and distributing gamma-ray detection data. The circuitry and hardware include a processor 9070, a network controller 9074, a memory 9078, and a data acquisition system (DAS) 9076. The PET imager also includes a data channel that routes detection measurement results from the GRDs to the DAS 9076, the processor 9070, the memory 9078, and the network controller 9074. The DAS 9076 can control the acquisition, digitization, and routing of the detection data from the detectors. In one implementation, the DAS 9076 controls the movement of the table 9160. The processor 9070 performs functions including adjusting PET detector rings, pre-reconstruction processing of the detection data, image reconstruction, and post-reconstruction processing of the image data.

According to an embodiment, the processor 9070 of the PET scanner 8000 of FIG. 6 and FIG. 7 can be configured to perform any of the methods described herein, as well as variations thereof.

According to another embodiment, there may be fewer number of GRD modules, such as, for example, a single module.

In yet another embodiment, the DAS and memory functions are moved to multiple GRD modules, allowing some processing, including, for example the acquisition, digitization, and routing of the detection data to be performed in parallel by processors on each of the GRD modules.

As shown in FIG. 7, the processor 9070 can include a CPU that can be implemented as discrete logic gates, as an Application Specific Integrated Circuit (ASIC), a Field Programmable Gate Array (FPGA) or other Complex Programmable Logic Device (CPLD). An FPGA or CPLD implementation may be coded in VHDL.Verilog, or any other hardware description language and the code may be stored in an electronic memory directly within the FPGA or CPLD, or as a separate electronic memory. Further, the memory 9078 can be a hard disk drive, CD-ROM drive, DVD drive, FLASH drive, RAM, ROM or any other electronic storage known in the art. The memory 9078 may be non-volatile, such as ROM, EPROM, EEPROM or FLASH memory. The memory 9078 can also be volatile, such as static or dynamic RAM, and a processor, such as a microcontroller or microprocessor, may be provided to manage the electronic memory as well as the interaction between the FPGA or CPLD and the memory.

Alternatively, the CPU in the processor 9070 can execute a computer program including a set of non-transitory computer-readable instructions that perform the methods described herein, the program being stored in any of the above-described non-transitory computer-readable medium including electronic memories and/or a hard disk drive, CD, DVD, FLASH drive or any other known storage media. Further, the computer-readable instructions may be provided as a utility application, background daemon, or component of an operating system, or combination thereof, executing in conjunction with a processor, such as a XENON^{®} processor from Intel of America or an OPTERON^{®} processor from AMD of America and an operating system, such as Microsoft VISTA^{®}, UNIX, Solaris^{®}, LINUX, Apple MAC-OS^{®} and other operating systems known to those skilled in the art. Further, CPU can be implemented as multiple processors locally or in a distributed cloud configuration cooperatively working in parallel to perform the instructions.

In one implementation, the PET scanner may include a display for displaying a reconstructed image and the like. The display can be an LCD display, CRT display, plasma display, OLED, LED, or any other display known in the art.

The network controller 9074, such as an Intel Ethernet PRO network interface card from Intel Corporation of America, can interface between the various parts of the PET imager. Additionally, the network controller 9074 can also interface with an external network. As can be appreciated, the external network can be a public network, such as the Internet, or a private network such as an LAN or WAN network, or any combination thereof and can also include PSTN or ISDN sub-networks. The external network can also be wired, such as an Ethernet network, or can be wireless such as a cellular network including GPRS, EDGE, 3G, 4Gand 5G wireless cellular systems. The wireless network can also be Wi-Fi, Bluetooth, or any other wireless form of communication that is known.

Obviously, numerous modifications and variations are possible in light of the above teachings. It is therefore to be understood that within the scope of the appended claims, the invention may be practiced otherwise than as specifically described herein.

The method and system described herein can be implemented in a number of technologies but generally relate to imaging devices and/or processing circuitry for performing the processes described herein. In an embodiment in which neural networks are used, the processing circuitry used to train the neural network(s) need not be the same as the processing circuitry used to implement the trained neural network(s) that perform(s) the methods described herein. For example, an FPGA may be used to produce a trained neural network (e.g. as defined by its interconnections and weights), and the processor 470 and memory 478 can be used to implement the trained neural network. Moreover, the training and use of a trained neural network may use a serial implementation or a parallel implementation for increased performance (e.g., by implementing the trained neural network on a parallel processor architecture such as a graphics processor architecture).

In the preceding description, specific details have been set forth. It should be understood, however, that techniques herein may be practiced in other embodiments that depart from these specific details, and that such details are for purposes of explanation and not limitation. Embodiments disclosed herein have been described with reference to the accompanying drawings. Similarly, for purposes of explanation, specific numbers, materials, and configurations have been set forth in order to provide a thorough understanding. Nevertheless, embodiments may be practiced without such specific details. Components having substantially the same functional constructions are denoted by like reference characters, and thus any redundant descriptions may be omitted.

Various techniques have been described as multiple discrete operations to assist in understanding the various embodiments. The order of description should not be construed as to imply that these operations are necessarily order dependent. Indeed, these operations need not be performed in the order of presentation. Operations described may be performed in a different order than the described embodiment. Various additional operations may be performed and/or described operations may be omitted in additional embodiments.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention as defined by the appended claims.

## Claims

1. An image processing apparatus, comprising:
processing circuitry (9070) configured to
acquire list-mode data corresponding to a plurality of positron emission tomography, PET, detection times,
generate a plurality of frames based on the list-mode data,
assign at least one frame of the plurality of frames into a first frame group based on a similarity of each frame,
assign at least one frame of the plurality of frames into a second frame group based on a similarity of each frame,
estimate first and second frame group-specific reconstruction parameters based on frames in first frame group, and frames in the second frame group, respectively, wherein the first and second frame group-specific reconstruction parameters are different,
reconstruct a first set of frame data from any frame of the first frame group based on the first frame group-specific reconstruction parameter, and
reconstruct a second set of frame data from any frame of the second frame group based on the second frame group-specific reconstruction parameter, wherein the processing circuitry (9070) is further configured to perform clustering using a neural network,
the neural network is an auto-encoder neural network and
the processing circuitry (9070) is further configured to produce a set of latent features from the plurality of frames, the set of latent features being extracted from the auto-encoder neural network and assign the at least one frame of the plurality of frames into the first frame group based on a similarity of latent features of the set of latent features of each frame, and assign the at least one frame of the plurality of frames into the second frame group based on a similarity of latent features of the set of latent features of each frame.

2. The image processing apparatus according to claim 1, wherein the processing circuitry (9070) is further configured to estimate the first and second frame group-specific reconstruction parameters based on a last-in-time frame in first frame group, and a last-in-time frame in the second frame group, respectively.

3. The image processing apparatus according to claim 1 or 2, wherein the processing circuitry (9070) is further configured to estimate respective frame group-specific reconstruction parameters from a single frames for a frame group having only one frame, and less than all frames for frame groups having more than one frame.

4. The image processing apparatus according to claim 1 or 2, wherein the processing circuitry (9070) is further configured to estimate respective frame group-specific reconstruction parameters from a single frame for a frame group having only one frame, and an average of plural frames for frame groups having more than one frame.

5. The image processing apparatus according to any one of claims 1 to 4, wherein the plurality of frames generated by the processing circuitry (9070) is a plurality of frames of crystal counts.

6. The image processing apparatus according to any one of claims 1 to 5, wherein the first and second frame group-specific reconstruction parameters used by the processing circuitry (9070) are first and second frame group-specific scatter parameters, respectively.

7. The image processing apparatus according to any one of claims 1 to 5, wherein the first and second frame group-specific reconstruction parameters used by the processing circuitry (9070) are first and second frame group-specific random event parameters, respectively.

8. The image processing apparatus according to claim 1, wherein the plurality of frames generated by the processing circuitry (9070) is a plurality of pre-reconstruction data frames.

9. The image processing apparatus according to claim 8, wherein the plurality of pre-reconstruction data frames generated by the processing circuitry (9070) is a plurality of crystal count maps.

10. The image processing apparatus according to claim 8, wherein the plurality of pre-reconstruction data frames generated by the processing circuitry (9070) is a plurality of frames of sinogram data.

11. The image processing apparatus according to claim 1, wherein the plurality of frames generated by the processing circuitry (9070) is a plurality of preview reconstruction frames without scatter correction.

12. The image processing apparatus according to claim 1, wherein the processing circuitry (9070) is further configured to perform clustering to assign the at least one frame of the plurality of frames into the first frame group based on the similarity of each frame, and assign the at least one frame of the plurality of frames into the second frame group based on the similarity of each frame.

13. The image processing apparatus according to claim 1, wherein the processing circuitry (9070) is configured to:
cluster the set of latent features from the plurality of frames,
assign the at least one frame of the plurality of frames into the first frame group based on the clustered latent features of the set of latent features of each frame, and
assign the at least one frame of the plurality of frames into the second frame group based on the clustered latent features of the set of latent features of each frame.

14. An image processing method, comprising:
receiving list-mode data corresponding to a plurality of positron emission tomography, PET, detection times;
generating a plurality of frames based on the list-mode data;
performing clustering using an auto-encoder neural network;
producing a set of latent features from the plurality of frames, the set of latent features being extracted from the auto-encoder neural network;
assigning at least one frame of the plurality of frames into a first frame group based on a similarity of latent features of the set of latent features of each frame;
assigning at least one frame of the plurality of frames into a second frame group based on a similarity of latent features of the set of latent features of each frame;
estimating first and second frame group-specific reconstruction parameters based on frames in first frame group, and frames in the second frame group, respectively, wherein the first and second frame group-specific reconstruction parameters are different;
reconstructing a first set of frame data from any frame of the first frame group based on the first frame group-specific reconstruction parameter; and
reconstructing a second set of frame data from any frame of the second frame group based on the second frame group-specific reconstruction parameter.

15. A program that, when executed by processing circuitry (9070), causes the processing circuitry (9070) to perform an image processing method according to claim 14.

## Patentansprüche

1. Bildverarbeitungseinrichtung, umfassend:
Verarbeitungsschaltung (9070), konfiguriert zum Erfassen von Listenmodusdaten, die einer Vielzahl von Positronen-Emissions-Tomographie-, PET-, Detektionszeiten entsprechen,
Erzeugen einer Vielzahl von Einzelbildern basierend auf den Listenmodusdaten,
Zuordnen mindestens eines Einzelbildes aus der Vielzahl von Einzelbildern zu einer ersten Einzelbildgruppe basierend auf einer Ähnlichkeit jedes Einzelbildes,
Zuordnen mindestens eines Einzelbildes aus der Vielzahl von Einzelbildern zu einer zweiten Einzelbildgruppe basierend auf einer Ähnlichkeit jedes Einzelbildes,
Schätzen erster und zweiter Einzelbildgruppen-spezifischer Rekonstruktionsparameter basierend auf Einzelbildern in der ersten Einzelbildgruppe bzw. Einzelbildern in der zweiten Einzelbildgruppe, wobei die ersten und zweiten Einzelbildgruppen-spezifischen Rekonstruktionsparameter unterschiedlich sind,
Rekonstruieren eines ersten Satzes von Einzelbilddaten aus einem beliebigen Einzelbild der ersten Einzelbildgruppe basierend auf dem ersten Einzelbildgruppen-spezifischen Rekonstruktionsparameter und
Rekonstruieren eines zweiten Satzes von Einzelbilddaten aus einem beliebigen Einzelbild der zweiten Einzelbildgruppe basierend auf dem zweiten Einzelbildgruppen-spezifischen Rekonstruktionsparameter, wobei die Verarbeitungsschaltung (9070) weiter so konfiguriert ist, dass sie ein Clustering unter Verwendung eines neuronalen Netzwerks durchführt,
wobei das neuronale Netzwerk ein neuronales Autoencoder-Netzwerk ist und
die Verarbeitungsschaltung (9070) weiter so konfiguriert ist, dass sie aus der Vielzahl von Einzelbildern einen Satz latenter Merkmale erzeugt, wobei der Satz latenter Merkmale aus dem neuronalen Autoencoder-Netzwerk extrahiert wird, und das mindestens eine Einzelbild der Vielzahl von Einzelbildern der ersten Einzelbildgruppe basierend auf einer Ähnlichkeit der latenten Merkmale des Satzes latenter Merkmale jedes Einzelbildes zuordnet und das mindestens eine Einzelbild der Vielzahl von Einzelbildern der zweiten Einzelbildgruppe basierend auf einer Ähnlichkeit der latenten Merkmale des Satzes latenter Merkmale jedes Einzelbildes zuordnet.

2. Bildverarbeitungseinrichtung nach Anspruch 1, wobei die Verarbeitungsschaltung (9070) weiter so konfiguriert ist, dass sie die ersten und zweiten Einzelbildgruppen-spezifischen Rekonstruktionsparameter basierend auf einem zeitlich letzten Einzelbild in der ersten Einzelbildgruppe und einem zeitlich letzten Einzelbild in der zweiten Einzelbildgruppe schätzt.

3. Bildverarbeitungseinrichtung nach Anspruch 1 oder 2, wobei die Verarbeitungsschaltung (9070) weiter so konfiguriert ist, dass sie die jeweiligen Einzelbildgruppen-spezifischen Rekonstruktionsparameter aus einem einzelnen Einzelbild für eine Einzelbildgruppe, die nur ein Einzelbild aufweist, und aus weniger als allen Einzelbildern für Einzelbildgruppen, die mehr als ein Einzelbild aufweisen, schätzt.

4. Bildverarbeitungseinrichtung nach Anspruch 1 oder 2, wobei die Verarbeitungsschaltung (9070) weiter so konfiguriert ist, dass sie die jeweiligen Einzelbildgruppen-spezifischen Rekonstruktionsparameter aus einem einzelnen Einzelbild für eine Einzelbildgruppe, die nur ein Einzelbild ausweist, und aus einem Durchschnitt mehrerer Einzelbilder für Einzelbildgruppen, die mehr als ein Einzelbild aufweisen, schätzt.

5. Bildverarbeitungseinrichtung nach einem der Ansprüche 1 bis 4, wobei es sich bei der von der Verarbeitungsschaltung (9070) erzeugten Vielzahl von Einzelbildern um eine Vielzahl von Kristallzählwerten handelt.

6. Bildverarbeitungseinrichtung nach einem der Ansprüche 1 bis 5, wobei die von der Verarbeitungsschaltung (9070) verwendeten ersten und zweiten Einzelbildgruppen-spezifischen Rekonstruktionsparameter erste bzw. zweite Einzelbildgruppen-spezifische Streuparameter sind.

7. Bildverarbeitungseinrichtung nach einem der Ansprüche 1 bis 5, wobei die von der Verarbeitungsschaltung (9070) verwendeten ersten und zweiten Einzelbildgruppen-spezifischen Rekonstruktionsparameter erste bzw. zweite Einzelbildgruppen-spezifische Zufallsereignisparameter sind.

8. Bildverarbeitungseinrichtung nach Anspruch 1, wobei es sich bei der Vielzahl von Einzelbildern, die von der Verarbeitungsschaltung (9070) erzeugt werden, um eine Vielzahl von Dateneinzelbildern vor der Rekonstruktion handelt.

9. Bildverarbeitungseinrichtung nach Anspruch 8, wobei es sich bei der Vielzahl von Dateneinzelbildern vor der Rekonstruktion, die von der Verarbeitungsschaltung (9070) erzeugt werden, um eine Vielzahl von Kristallzählkarten handelt.

10. Bildverarbeitungseinrichtung nach Anspruch 8, wobei es sich bei der Vielzahl von Dateneinzelbildern vor der Rekonstruktion, die von der Verarbeitungsschaltung (9070) erzeugt werden, um eine Vielzahl von Einzelbildern von Sinogrammdaten handelt.

11. Bildverarbeitungseinrichtung nach Anspruch 1, wobei es sich bei der Vielzahl von Einzelbildern, die von der Verarbeitungsschaltung (9070) erzeugt werden, um eine Vielzahl von Vorschau-Rekonstruktionseinzelbildern ohne Streukorrektur handelt.

12. Bildverarbeitungseinrichtung nach Anspruch 1, wobei die Verarbeitungsschaltung (9070) weiter so konfiguriert ist, dass sie ein Clustering durchführt, um das mindestens eine Einzelbild aus der Vielzahl von Einzelbildern der ersten Einzelbildgruppe basierend auf der Ähnlichkeit jedes Einzelbildes zuzuordnen, und das mindestens eine Einzelbild aus der Vielzahl von Einzelbildern der zweiten Einzelbildgruppe basierend auf der Ähnlichkeit jedes Einzelbildes zuzuordnen.

13. Bildverarbeitungseinrichtung nach Anspruch 1, wobei die Verarbeitungsschaltung (9070) konfiguriert ist:
den Satz latenter Merkmale aus der Vielzahl von Einzelbildern zu clustern,
das mindestens eine Einzelbild der Vielzahl von Einzelbildern der ersten Einzelbildgruppe basierend auf den geclusterten latenten Merkmalen des Satzes latenter Merkmale jedes Einzelbildes zuzuordnen, und
das mindestens eine Einzelbild der Vielzahl von Einzelbildern der zweiten Einzelbildgruppe basierend auf den geclusterten latenten Merkmalen des Satzes latenter Merkmale jedes Einzelbildes zuzuordnen.

14. Bildverarbeitungsverfahren, umfassend:
Empfangen von Listenmodusdaten, die einer Vielzahl von Positronen-Emissions-Tomographie-, PET-, Detektionszeiten entsprechen;
Erzeugen einer Vielzahl von Einzelbildern basierend auf den Listenmodusdaten;
Durchführen eines Clustering unter Verwendung eines neuronalen Autoencoder-Netzwerks;
Erzeugen eines Satzes latenter Merkmale aus der Vielzahl von Einzelbildern, wobei der Satz latenter Merkmale aus dem neuronalen Autoencoder-Netzwerk extrahiert wird;
Zuordnen mindestens eines Einzelbildes der Vielzahl von Einzelbildern zu einer ersten Einzelbildgruppe basierend auf einer Ähnlichkeit latenter Merkmale des Satzes latenter Merkmale jedes Einzelbildes;
Zuordnen mindestens eines Einzelbildes der Vielzahl von Einzelbildern zu einer zweiten Einzelbildgruppe basierend auf einer Ähnlichkeit latenter Merkmale des Satzes latenter Merkmale jedes Einzelbildes;
Schätzen erster und zweiter Einzelbildgruppen-spezifischer Rekonstruktionsparameter basierend auf Einzelbildern in der ersten Einzelbildgruppe bzw. Einzelbildern in der zweiten Einzelbildgruppe, wobei die ersten und zweiten Einzelbildgruppen-spezifischen Rekonstruktionsparameter unterschiedlich sind;
Rekonstruieren eines ersten Satzes von Einzelbilddaten aus einem beliebigen Einzelbild der ersten Einzelbildgruppe basierend auf dem ersten Einzelbildgruppen-spezifischen Rekonstruktionsparameter; und
Rekonstruieren eines zweiten Satzes von Einzelbilddaten aus einem beliebigen Einzelbild der zweiten Einzelbildgruppe basierend auf dem zweiten Einzelbildgruppen-spezifischen Rekonstruktionsparameter.

15. Programm, das, wenn es von einer Verarbeitungsschaltung (9070) ausgeführt wird, die Verarbeitungsschaltung (9070) veranlasst, ein Bildverarbeitungsverfahren nach Anspruch 14 durchzuführen.

## Revendications

1. Appareil de traitement d'image, comprenant :
un circuit de traitement (9070) configuré pour acquérir des données en mode liste correspondant à une pluralité de temps de détection de tomographie par émission de positrons, TEP,
la génération d'une pluralité de trames à partir des données en mode liste,
l'affectation d'au moins une trame parmi la pluralité de trames à un premier groupe de trames en fonction de la similarité de chaque trame,
l'affectation d'au moins une trame parmi la pluralité de trames à un second groupe de trames en fonction d'une similarité entre chaque trame,
l'estimation des paramètres de reconstruction spécifiques au premier et au second groupe de trames sur la base respectivement des trames du premier groupe de trames et celles du second groupe de trames, dans lequel les paramètres de reconstruction spécifiques au premier et au second groupe de trames sont différents,
la reconstruction d'un premier ensemble de données de trame à partir de n'importe quelle trame du premier groupe de trames en fonction du paramètre de reconstruction spécifique au premier groupe de trames, et
la reconstruction d'un second ensemble de données de trame à partir de n'importe quelle trame du second groupe de trames en fonction du paramètre de reconstruction spécifique au second groupe de trames, dans lequel le circuit de traitement (9070) est en outre configuré pour effectuer un regroupement à l'aide d'un réseau neuronal,
le réseau neuronal est un réseau neuronal auto-encodeur et
le circuit de traitement (9070) est en outre configuré pour produire un ensemble de caractéristiques latentes à partir de la pluralité de trames, l'ensemble de caractéristiques latentes étant extrait du réseau neuronal auto-encodeur et assignant la au moins une trame de la pluralité de trames au premier groupe de trames sur la base d'une similarité des caractéristiques latentes de l'ensemble des caractéristiques latentes de chaque trame, et assignant la au moins une trame de la pluralité de trames au second groupe de trames sur la base d'une similarité des caractéristiques latentes de l'ensemble des caractéristiques latentes de chaque trame.

2. Appareil de traitement d'images selon la revendication 1, dans lequel le circuit de traitement (9070) est en outre configuré pour estimer les paramètres de reconstruction spécifiques au premier et au second groupe de trames sur la base d'une dernière trame dans le temps du premier groupe de trames et d'une dernière trame dans le temps du second groupe de trames, respectivement.

3. Appareil de traitement d'images selon la revendication 1 ou 2, dans lequel le circuit de traitement (9070) est en outre configuré pour estimer les paramètres de reconstruction spécifiques à chaque groupe de trames à partir d'une seule trame pour un groupe de trames ne comportant qu'une seule trame, et à partir de moins de toutes les trames pour les groupes de trames comportant plus d'une trame.

4. Appareil de traitement d'images selon la revendication 1 ou 2, dans lequel le circuit de traitement (9070) est en outre configuré pour estimer les paramètres de reconstruction spécifiques à chaque groupe de trames à partir d'une seule trame pour un groupe de trames ne comportant qu'une seule trame, et d'une moyenne de plusieurs trames pour les groupes de trames comportant plus d'une trame.

5. Appareil de traitement d'images selon l'une quelconque des revendications 1 à 4, dans lequel la pluralité de trames générées par le circuit de traitement (9070) est une pluralité de trames de comptages de cristaux.

6. Appareil de traitement d'images selon l'une quelconque des revendications 1 à 5, dans lequel les paramètres de reconstruction spécifiques au premier et au second groupe de trames utilisés par le circuit de traitement (9070) sont respectivement des paramètres de diffusion spécifiques au premier et au second groupe de trames.

7. Appareil de traitement d'images selon l'une quelconque des revendications 1 à 5, dans lequel les paramètres de reconstruction spécifiques au premier et au second groupe de trames utilisés par le circuit de traitement (9070) sont respectivement des paramètres d'événement aléatoire spécifiques au premier et au second groupe de trames.

8. Appareil de traitement d'images selon la revendication 1, dans lequel la pluralité de trames générées par le circuit de traitement (9070) est une pluralité de trames de données de pré-reconstruction.

9. Appareil de traitement d'images selon la revendication 8, dans lequel la pluralité de trames de données de pré-reconstruction générées par le circuit de traitement (9070) est une pluralité de cartes de comptage de cristaux.

10. Appareil de traitement d'images selon la revendication 8, dans lequel la pluralité de trames de données de pré-reconstruction générées par le circuit de traitement (9070) est une pluralité de trames de données de sinogramme.

11. Appareil de traitement d'images selon la revendication 1, dans lequel la pluralité de trames générées par le circuit de traitement (9070) est une pluralité de trames de reconstruction de prévisualisation sans correction de diffusion.

12. Appareil de traitement d'images selon la revendication 1, dans lequel le circuit de traitement (9070) est en outre configuré pour effectuer un regroupement afin d'attribuer au moins une trame de la pluralité de trames au premier groupe de trames en fonction de la similarité de chaque trame, et d'attribuer la au moins une trame de la pluralité de trames au second groupe de trames en fonction de la similarité de chaque trame.

13. Appareil de traitement d'images selon la revendication 1, dans lequel le circuit de traitement (9070) est configuré pour :
regrouper l'ensemble des caractéristiques latentes à partir de la pluralité de trames,
affecter la au moins une trame parmi la pluralité de trames au premier groupe de trames en fonction des caractéristiques latentes regroupées de l'ensemble des caractéristiques latentes de chaque trame, et
affecter la au moins une trame parmi la pluralité de trames au second groupe de trames en fonction des caractéristiques latentes regroupées de l'ensemble des caractéristiques latentes de chaque trame.

14. Procédé de traitement d'image, comprenant :
la réception de données en mode liste correspondant à une pluralité de temps de détection de tomographie par émission de positrons, TEP ;
la génération d'une pluralité de trames à partir des données en mode liste ;
la réalisation d'un regroupement à l'aide d'un réseau neuronal auto-encodeur ;
la production d'un ensemble de caractéristiques latentes à partir de la pluralité de trames, l'ensemble de caractéristiques latentes étant extrait du réseau neuronal auto-encodeur ;
l'attribution d'au moins une trame parmi la pluralité de trames à un premier groupe de trames en fonction d'une similarité des caractéristiques latentes de l'ensemble des caractéristiques latentes de chaque trame ;
l'attribution d'au moins une trame parmi la pluralité de trames à un second groupe de trames en fonction d'une similarité des caractéristiques latentes de l'ensemble des caractéristiques latentes de chaque trame ;
l'estimation des paramètres de reconstruction spécifiques au premier et au second groupe de trames, respectivement, en fonction des trames du premier groupe de trames et des trames du second groupe de trames, dans lequel les paramètres de reconstruction spécifiques au premier et au second groupe de trames sont différents ;
la reconstruction d'un premier ensemble de données de trame à partir de n'importe quelle trame du premier groupe de trames en fonction du paramètre de reconstruction spécifique au premier groupe de trames ; et
la reconstruction d'un second ensemble de données de trame à partir de n'importe quelle trame du second groupe de trames en fonction du paramètre de reconstruction spécifique au second groupe de trames.

15. Programme qui, lorsqu'il est exécuté par un circuit de traitement (9070), amène le circuit de traitement (9070) à effectuer un procédé de traitement d'image selon la revendication 14.
